# EUROPÄISCHE PATENTSCHRIFT

(11) **EP 0 509 267 B1**
(45) Veröffentlichungstag und Bekanntmachung des Hinweises auf die Patenterteilung: **27.12.1996**
(21) Anmeldenummer: 92104863.3
(22) Anmeldetag: 20.03.1992
(51) Int. Cl.: B25B 1/10, B23Q 3/02, B25B 1/24

(54) **Spannelement, enthaltend eine Schnellzustellvorrichtung kombiniert mit einem Kraftverstärker**
Clamping device comprising rapid adjustment combined with power amplifier
Dispositif de serrage comprenant un dispositif de positionnement rapide avec amplificateur de force

(30) Priorität: 17.04.1991 DE 4112512
(43) Veröffentlichungstag der Anmeldung: 21.10.1992
(73) Patentinhaber: Gressel AG, CH-8355 Aadorf (CH)
(72) Erfinder: Schäublin, Thomas, CH-9542 Münchwilen (CH); Berchtold, Heinrich, CH-8606 Nänikon/Uster (CH)
(74) Vertreter: Liebau, Gerhard, Dipl.-Ing.

(56) Entgegenhaltungen:
- EP-A- 0 305 724
- DE-C- 4 018 284

## Beschreibung

Die Erfindung betrifft ein Spannelement, enthaltend eine Schnellzustellvorrichtung kombiniert mit einem Kraftverstärker, mit einer den Kraftverstärker umschließenden, drehbaren Zustellhülse, welche ein Außengewinde aufweist und mit diesem in ein Muttergewinde eines sie umgebenden Gehäuses eingreift und deren Drehbewegung gegenüber dem Gehäuse durch Anschlagflächen begrenzt ist, mit einem in der Zustellhülse fest angeordneten ersten Spannglied, mit einem in der Zustellhülse begrenzt drehbar angeordneten zweiten Spannglied, mit mehreren zwischen den Spanngliedern angeordneten Spannbolzen, die in einer Endlage (Entspannstellung) des zweiten Spanngliedes in spitzem Winkel zu einer durch die Zustellhülsenachse verlaufenden Ebene geneigt und in der anderen Endlage (Spannstellung) des zweiten Spanngliedes annähernd parallel zu dieser Ebene angeordnet sind, mit einer beide Spannglieder aufeinanderzu belastenden Druckfeder und mit einer sich durch mindestens eine Ausnehmung des ersten Spanngliedes hindurcherstreckenden Betätigungs- und Zugstange, die mit dem zweiten Spannglied dreh- und zugfest verbunden ist, derart, daß beim Drehen der Betätigungs- und Zugstange im Spannsinn dieselbe zunächst durch Drehung der Zustellhülse gegenüber dem Gehäuse und dann durch Verdrehung des zweiten Spanngliedes gegenüber dem ersten und dadurch bedingtes Aufrichten der Spannbolzen in zur Ebene parallele Spannstellung, in einem Zustellhub und einem anschließenden Spannhub axial in das Gehäuse hineingezogen wird.

Bei einem derartigen Spannelement (vgl. nicht vorveröffentlichtes, älteres deutsches Patent 40 18 284) ist die Zugstange zentral sowohl durch das erste Spannglied als auch durch das zweite Spannglied hindurchgeführt und mit diesem durch einen Querbolzen verbunden. Die Spannbolzen sind radial außerhalb der Zugstange an den Spanngliedern abgestützt. Durch Verdrehung des zweiten Spanngliedes gegenüber dem ersten Spannglied mittels der Betätigungs- und Zugstange werden die Spannglieder aus ihrer schräg zur Zustellhülsenachse verlaufenden Stellung aufgerichtet, d.h. in eine parallel oder annähernd parallel zur Zustellhülsenachse verlaufende Spannstellung gebracht. Da hierbei die Spannkraft stark ansteigt, ist ein entsprechend großes Drehmoment nötig, um die Betätigungs- und Zugstange um ihre Achse zu drehen. Bei kleineren Maschinenschraubstöcken oder Schnellspannvorrichtungen, für die Spannelemente der gattungsgemäßen Art hauptsächlich Anwendung finden, liegt das beim Spannen zur Verdrehung der Betätigungs- und Zugstange erforderliche Drehmoment in einem Bereich, der eine Verdrehung der Betätigungs- und Zugstange mittels eines Handhebels zuläßt. Für größere Maschinenschraubstöcke und Spannvorrichtungen mit einer Spannkraft von 40 kN wird jedoch das zum Verdrehen der Betätigungs- und Zugstange erforderliche Drehmoment so groß, daß Handkraft nicht mehr ausreicht oder der Betätigungshebel so lang werden würde, daß er mit Teilen in der Umgebung der Spannvorrichtung kollidiert. Zu berücksichtigen ist hierbei, daß bei dem gattungsgemäßen Spannelement die zur Erzeugung sowohl des Zustellhubes als auch des Spannhubes der Zugstange erforderliche Verdrehung der Betätigungs- und Zugstange möglichst weniger als 180° sein soll.

Der Erfindung liegt daher die Aufgabe zugrunde, ein Spannelement, enthaltend eine Schnellzustellvorrichtung kombiniert mit einem Kraftverstärker der eingangs erwähnten Art zu schaffen, bei dem das zur Drehung der Betätigungs- und Zugstange erforderliche Drehmoment möglichst klein ist, um eine einfache und bequeme Handbetätigung zu ermöglichen.

Dies wird durch die Erfindung dadurch erreicht, daß die Spannbolzen am zweiten Spannglied in möglichst kleinem Abstand zur Zustellhülsenachse abgestützt sind und daß die Betätigungs- und Zugstange entweder durch eine zentrale Ausnehmung im ersten Spannglied hindurchgeführt ist, wobei die Achsen der Spannbolzen in Spannstellung nicht parallel zur Zustellhülsenachse verlaufen oder durch zwei einander diametral gegenüberliegende, seitliche Ausnehmungen des ersten Spanngliedes hindurchgeführt ist, wobei letztgenannte Ausnehmungen in Umfangsrichtung der Zustellhülse so groß sind, daß sie eine begrenzte, für die Drehung des zweiten Spanngliedes gegenüber dem ersten Spannglied ausreichende Verdrehung der Betätigungs- und Zugstange gegenüber der Zustellhülse zulassen.

Bei dem neuen Spannelement sind also die Spannbolzen am zweiten Spannglied, auf welches die Betätigungs- und Zugstange unmittelbar einwirkt, in größtmöglicher Nähe zur Zustellhülsenachse, die gleichzeitig auch Zentralachse des Spannelementes ist, angeordnet. Hierdurch wird das zum Verdrehen der Betätigungs- und Zugstange beim eigentlichen Spannhub erforderliche Drehmoment wesentlich verringert, da der Hebelarm zwischen der Zentralachse und der Abstützung der Spannbolzen am zweiten Spannglied verhältnismäßig klein ist. Das verringerte Drehmoment hat den Vorteil, daß auch bei Spannkräften von 40 kN und mehr, Handkraft zur Betätigung ausreicht und sich die Länge des Handhebels in zulässigen Grenzen hält. Auch bei dem neuen Spannelement ist zur Ausführung des Zustellhubes und des Spannhubes der Betätigungs- und Zugstange nur eine Verdrehung derselben um weniger als 180° notwendig.

Vorteilhafte Ausgestaltungen der Erfindung sind in den Unteransprüchen gekennzeichnet.

Die Erfindung wird in folgendem, anhand von in der Zeichnung dargestellten Ausführungsbeispielen näher erläutert.

Es zeigen:
- Figur 1: einen Axialschnitt eines ersten Ausführungsbeispieles nach der Linie I-I der Figur 2,
- Figur 2: einen Radialschnitt des Spannelementes in Entspannstellung noch der Linie II-II der Figur 1 und teilweise nach Linie II-II der Figur 5,
- Figur 3: denselben Radialschnitt in Spannstellung,
- Figur 4: eine Stirnansicht des Spannelementes in Richtung IV, teilweise im Schnitt nach der Linie IV-IV der Figur 5,
- Figur 5: einen Teilschnitt nach der Linie V-V der Figur 4,
- Figur 6: einen Axialschnitt der hohlen Zugstange,
- Figur 7: einen Axialschnitt eines zweiten Ausführungsbeispieles,
- Figur 8: einen Axialschnitt der Zugstange,
- Figuren 9, 10 und 11: Querschnitte der Zugstange nach den Linien IX-IX, X-X und XI-XI der Figur 8.

Das Spannelement weist ein Gehäuse 1 auf, welches beispielsweise in den Grundkörper eines Maschinenschraubstockes oder einer Schnellspannvorrichtung einsetzbar ist und dort drehfest und axial unverschiebbar festgelegt wird. In dem Gehäuse 1 ist eine Zustellhülse 2 begrenzt drehbar gelagert. Die Zustellhülse 2 weist ein Außengewinde 3 auf, welches in ein entsprechendes Muttergewinde 4 des Gehäuses 1 eingreift. Beide Gewinde 3, 4 sind zweckmäßig als Grobgewinde (Steilgewinde) ausgebildet. Bei dem gezeigten Ausführungsbeispiel ist das Außengewinde 3 ein Trapezgewinde Tr 52 x 10 (mm), d.h. es hat bei einem Nenndurchmesser von 52 mm eine Steigung oder Ganghöhe von 10 mm. Da die Steigung des Außengewindes 3 wesentlich ist für den mit einem bestimmten Drehwinkel eines nicht dargestellten Handhebels erreichbaren Zustell- bzw. Öffnungshub, und da das Außengewinde 3 stets Selbsthemmung aufweisen muß, läßt sich die Steigung nicht beliebig erhöhen.

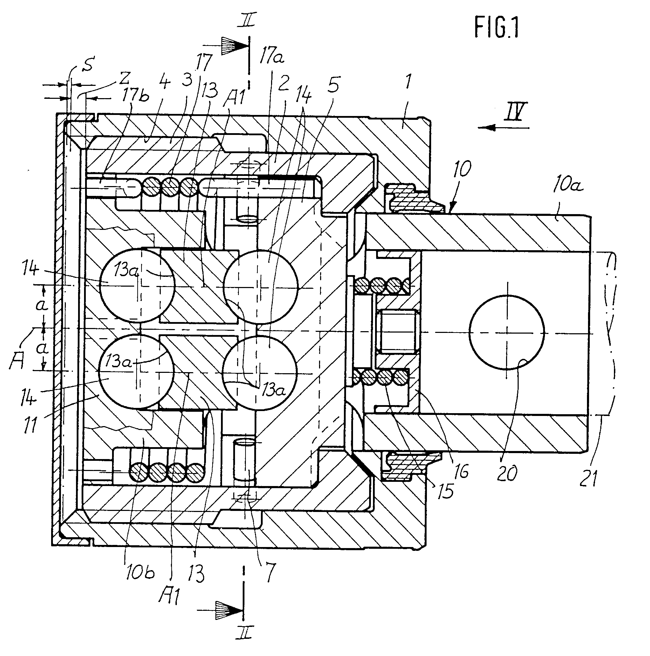

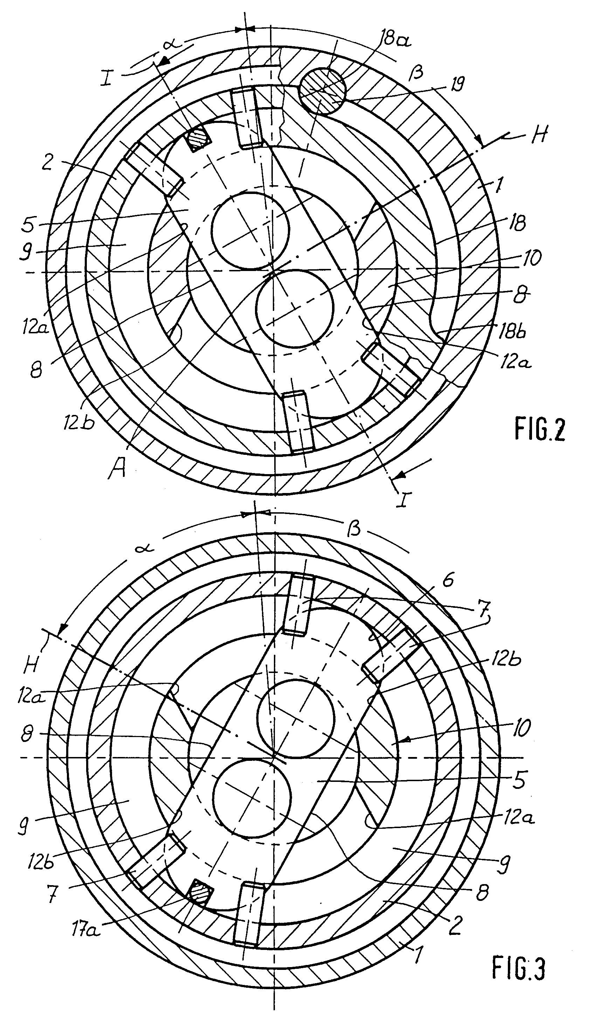

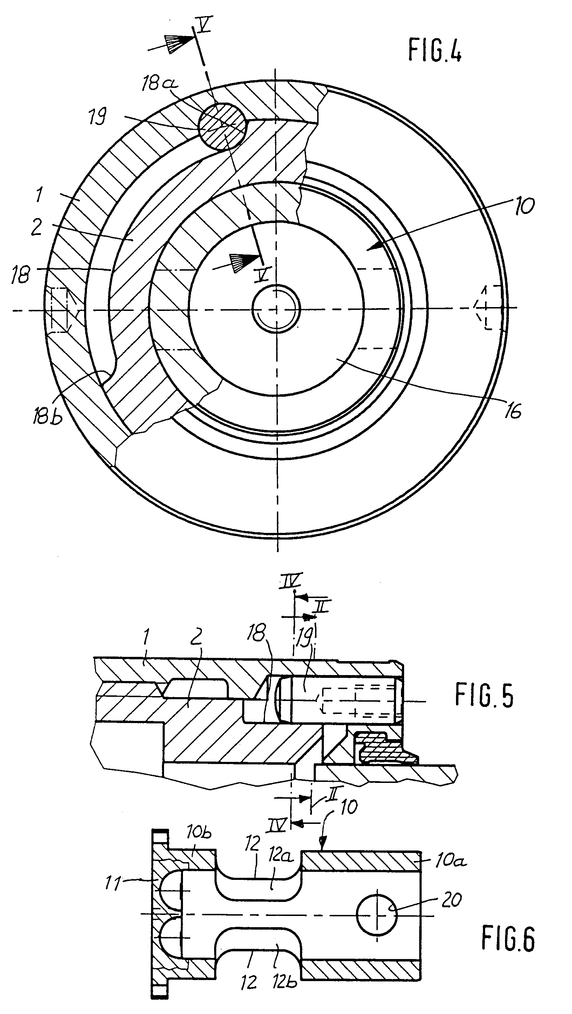

Innerhalb der Zustellhülse 2 ist ein erstes Spannglied 5 drehfest und gegenüber der Zustellhülse 2 axial unverschiebbar angeordnet. Zu diesem Zweck greift das brückenartig ausgebildete Spannglied 5, wie es aus Figur 3 ersichtlich ist, mit seinen diametral gegenüberliegenden Enden in halbkreisförmige Ausnehmungen 6 der Zustellhülse 2 ein, wodurch die drehfeste Verbindung hergestellt wird, und außerdem ist es axial durch die Fixierstifte 7 festgelegt. Durch die brückenartige Ausgestaltung des ersten Spanngliedes 5 sind zwischen dessen beiden seitlichen Begrenzungsflächen 8 und der Zustellhülse 2 zwei in bezug auf das erste Spannglied 5 einander diametral gegenüberliegende Ausnehmungen 9 gebildet. Durch diese Ausnehmungen 9 ist eine Betätigungs- und Zugstange 10 hindurchgeführt, die bei dem in Figur 1 - 6 dargestellten Ausführungsbeispiel hohl ausgebildet ist. Das eine Ende 10a dieser hohlen Betätigungs- und Zugstange 10 ist aus dem Gehäuse 1 herausgeführt, während das innerhalb des Gehäuses 1 angeordnete andere Ende 10b dreh- und zugfest mit einem zweiten Spannglied 11 verbunden ist. Das zweite Spannglied 11 besteht bei dem gezeigten Ausführungsbeispiel vorteilhaft aus einem Stück mit der hohlen Betätigungs- und Zugstange 10 und bildet den Boden derselben. In der Wandung der hohlen Betätigungs- und Zugstange 10 sind im Bereich des brückenartigen ersten Spanngliedes 5 zwei einander diametral gegenüberliegende Aussparungen 12 vorgesehen, die in Umfangsrichtung so groß sind, daß die Betätigungs- und Zugstange 10 gegenüber der Zustellhülse 2 um mindestens 30° verdrehbar ist. Bei dem gezeigten Ausführungsbeispiel beträgt die Verdrehbarkeit etwa 60°.

Zwischen den beiden Spanngliedern 5, 11 sind zwei Spannbolzen 13 vorgesehen, die zu beiden Seiten der Spannhülsenachse oder Zentralachse A des Spannelementes einander diametral gegenüberliegend angeordnet sind. Die Spannbolzen 13 weisen an ihren beiden Enden je eine Kugelpfanne 13a auf und in den beiden Spanngliedern 5, 11 sind Kugeln 14 angeordnet, an denen sich die Spannbolzen 13 mit ihren Kugelpfannen 13a abstützen. Wichtig hierbei ist, daß zumindest die Kugeln 14 am zweiten Spannglied 11 in möglichst kleinem Abstand a zur Zustellhülsenachse A angeordnet sind, wodurch auch die Abstützung der Spannbolzen 13 in größtmöglicher Nähe zur Zustellhülsenachse A erfolgt. Hierdurch ist sichergestellt, daß das zur Verdrehung der Betätigungs- und Zugstange 10 gegenüber der Zustellhülse 2 beim Spannhub erforderliche Drehmoment kleingehalten wird. Gegebenenfalls könnten die Spannbolzen 13 an ihren Enden auch halbkugelförmig ausgestaltet sein, wobei dann die Kugeln 14 entfallen.

In Figur 1 ist das Spannelement in Ausgangsstellung, d.h. in Entspannstellung, dargestellt. Hierbei ist das zweite Spannglied 11 mit seinen Kugeln 14 um etwa 52° in Umfangsrichtung verdreht. Die Spannbolzen 13 sind infolgedessen verschränkt oder in spitzem Winkel zur Zustellhülsenachse A geneigt angeordnet. Lediglich der Übersichtlichkeit halber sind in Figur 1 die Spannbolzen 13 in einer zur Zustellhülsenachse A parallelen Lage dargestellt, die sie in Spannstellung einnehmen.

In der Betätigungs- und Zugstange 10 ist ferner eine Druckfeder 15 angeordnet, die sich an einer eingepreßten Kappe 16 abstützt und auf das erste Spannglied 5 drückt. Hierdurch werden die Spannglieder 5, 11 aufeinanderzu belastet. Ferner ist eine Verdrehfeder 17 vorgesehen, deren Enden 17a, 17b in jeweils eines der Spannglieder 5, 11 eingreifen.

Diese Verdrehfeder 17 sorgt zusammen mit nachstehend noch näher beschriebenen Anschlägen dafür, daß sich die beiden Spannglieder 5, 11 in Ausgangs- oder Entspannstellung jeweils in einer genau definierten verdrehten Lage zueinander befinden. Diese Stellung entspricht Figur 2.

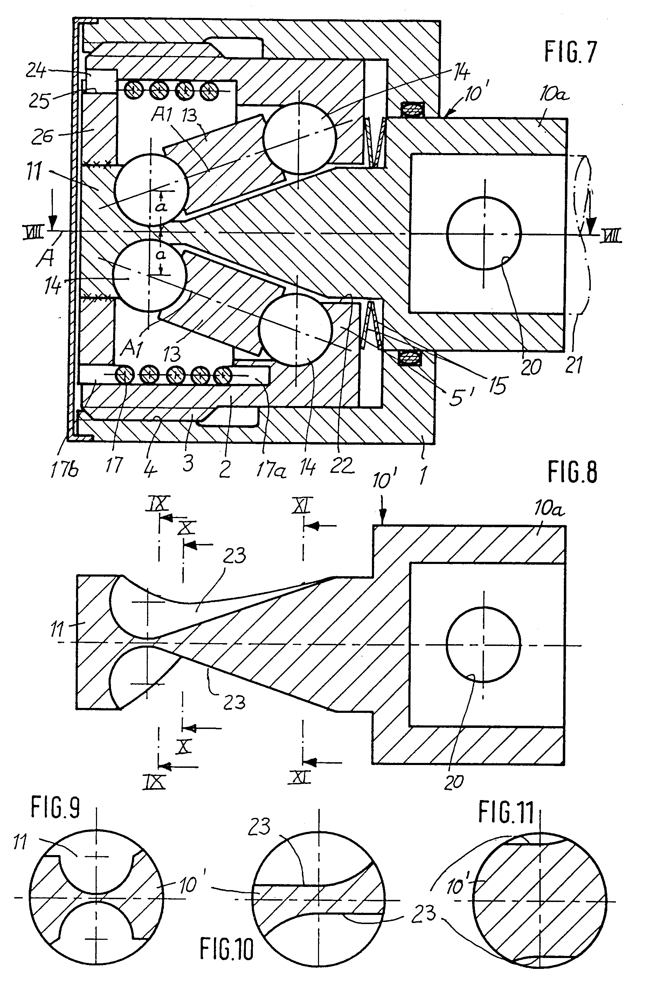

Wie aus Figur 6 ersichtlich ist, weisen die Aussparungen 12 axial verlaufende Begrenzungsflächen 12a, 12b auf, die als Anschlagflächen zur Begrenzung der gegenseitigen Verdrehung der beiden Spannglieder 5, 11 vorgesehen sind und mit den seitlichen Begrenzungsflächen 8 des ersten Spanngliedes 5 zusammenwirken. In Entspannstellung, die in Figur 2 dargestellt ist, hält die Verdrehfeder 17 die Begrenzungsflächen 12a in Anlage an den Begrenzungsflächen 8.

Ferner weist die Zustellhülse 2 eine in Umfangsrichtung verlaufende Nut 18 auf, die sich über einen Umfangswinkel von etwa 90° erstreckt und deren Enden 18a, 18b mit einem Anschlagbolzen 19 zusammenwirken, der im Gehäuse 1 fixiert ist.

Das aus dem Gehäuse 1 herausragende Ende 10a der Betätigungs- und Zugstange 10 ist über einen nicht dargestellten Kupplungsbolzen, der in die Querbohrung 20 eingreift, mit der Antriebsspindel 21 eines nicht dargestellten Maschinenschraubstockes oder einer Schnellspanneinrichtung verbindbar, wobei die Antriebsspindel selbst ebenfalls eine Betätigungs- und Zugstange darstellt, die auf eine bewegliche Spannbacke einwirkt, ähnlich wie es in dem deutschen Patent 40 18 284 dargestellt ist. Die Betätigungs- und Zugstange 10 hat also bei dem erfindungsgemäßen Spannelement zwei Funktionen. Sie dient zur Verdrehung der Zustellhülse 2 im Gehäuse 1 und zur gegenseitigen Verdrehung der Spannglieder 5, 11, also zur Betätigung des Spannelementes. Außerdem dient sie zur Übertragung der durch das Spannelement erzeugten Spannkraft auf eine Spannvorrichtung.

Die Wirkungsweise ist Folgende:

Mittels eines an der Antriebsspindel 21 angreifenden Handhebels, dessen Stellung in den Figuren 2 und 3 jeweils mit H angedeutet ist, kann die Antriebsspindel 21 und damit auch die Betätigungs- und Zugstange 10 gedreht werden. In Entspannstellung des Spannelementes ist die Zustellhülse 2 gemäß Figur 2 gegenüber dem Gehäuse 1 so weit nach rechts verdreht, daß die Anschlagfläche 18a an dem Anschlagbolzen 19 anliegt. Außerdem ist das zweite Spannglied 11 so weit nach rechts verdreht, daß die Begrenzungsflächen 12a der mit dem zweiten Spannglied 11 fest verbundenen Betätigungs- und Zugstange 10 an den Begrenzungsflächen 8 des ersten Spanngliedes 5 anliegen.Durch Schwenken des Handhebels H gemäß Figur 2 entgegen dem Uhrzeigersinn nach links wird die Betätigungs- und Zugstange 10 und damit auch das zweite Spannglied 11 gedreht. Unter der Wirkung der Druckfeder 15 sowie der Drehfeder 17 verbleiben die Spannbolzen 13 zunächst in ihrer verschränkten, gegenüber der Zustellhülsenachse A schrägen Lage. Bei der anfänglichen Drehung des zweiten Spanngliedes 11 wird damit auch das erste Spannglied 5 in der gleichen Drehrichtung mitgenommen. Da dieses drehfest mit der Zustellhülse 2 verbunden ist, wird zunächst auch die Zustellhülse 2 in der gleichen Drehrichtung gedreht. Durch das Zusammenwirken des Außengewindes 3 mit dem Muttergewinde 4 bewegt sich die Zustellhülse 2 gemäß Figur 1 um einen Zustellhub Z, der bei dem gezeigten Ausführungsbeispiel maximal 2,5 mm betragen kann, nach links. Über das erste Spannglied 5 und die Spannbolzen 13 wird auch das zweite Spannglied 11 nach links verschoben und nimmt dabei die Betätigungs- und Zugstange 10 mit, die um den Zustellhub Z in das Gehäuse 1 hinein verschoben wird. Hierdurch wird beispielsweise eine bewegliche Backe eines Maschinenschraubstockes oder einer Schnellspannvorrichtung an ein Werkstück heranbewegt und zur Anlage gebracht. Um den maximalen Zustellhub Z von 2,5 mm zu erreichen, muß der Handhebel H um einen Winkel β von 90° verschwenkt werden.

Sobald die bewegliche Backe am Werkstück anliegt, steigt das Drehmoment an und eine weitere Drehung der Zustellhülse 2 wird durch die Gewinde 3, 4 blockiert. Es kann sich damit auch das erste Spannglied 5 nicht weiterdrehen. Jetzt erfolgt der eigentliche Spannhub. Bei Weiterdrehung des zweiten Spanngliedes 11 gemäß Figur 2 nach links werden die Spannbolzen 13 aufgerichtet, d.h. ihre Verschränkung oder ihr spitzer Winkel gegenüber der Zustellhülsenachse A nimmt ab. Durch dieses Aufrichten der Spannbolzen 13 vergrößert sich der Abstand zwischen den beiden Spanngliedern 5, 11. Die Drehung des zweiten Spanngliedes 11 wird so weit fortgesetzt, bis die Achsen A1 der Spannbolzen 13 über ihre parallel zur Zustellhülsenachse A verlaufende Totpunktlage hinaus um etwa 3° entgegengesetzt zu ihrer Ausgangsstellung gegenüber der Zustellhülsenachse A geneigt sind. Durch die Bewegung der Spannbolzen 13 über ihre parallele Lage zur Zustellhülsenachse A, d.h. über ihre Totpunktlage hinaus, wird eine sichere Verriegelung des Kraftverstärkers erreicht. Um diese Spannstellung zu erreichen, wurde der Handhebel H um den Winkel α, beim gezeigten Ausführungsbeispiel um 58°, geschwenkt. Hierdurch gelangt die Betätigungs- und Zugstange 10 in die in Figur 3 dargestellte Lage, in welcher eine weitere Drehbewegung durch Anlage der Begrenzungsflächen 12b an den seitlichen Begrenzungsflächen 8 des Spanngliedes 5 verhindert wird. Durch die Vergrößerung des Abstandes zwischen den beiden Spanngliedern 5, 11 wird das zweite Spannglied um den Spannhub S von etwa 1 mm noch weiter nach links verschoben und zieht damit auch die Betätigungs- und Zugstange 10 um den gleichen Betrag in das Gehäuse 1 hinein. Hierdurch übt die Betätigungs- und Zugstange 10 auf die Antriebsspindel 21 die gewünschte hohe Spannkraft aus, die z.B. eine bewegliche Spannbacke in Richtung auf das Gehäuse 1 hin zieht. Während der Drehwinkel α, den der Handhebel H während des Spannhubes S ausführt, immer gleich groß ist, hängt der Drehwinkel β während des Zustellhubes davon ab, um welchen Betrag die bewegliche Spannbacke bewegt werden mußte, bis sie am Werkstück anliegt. Wenn das Spiel zwischen geöffneter Spannbacke und Werkstück kleiner ist als der maximale Zustellhub Z, ist auch der Drehwinkel β kleiner als 90°.

Das Entspannen erfolgt in umgekehrter Reihenfolge, indem der Handhebel H gemäß Figur 3 in entgegengesetzter Drehrichtung nach rechts verschwenkt wird. Hierbei dreht sich die Betätigungs- und Zugstange 10 mit dem zweiten Spannglied 11 ebenfalls nach rechts, bis die Begrenzungsfläche 12a wieder an der seitlichen Begrenzungsfläche 8 des ersten Spanngliedes 5 zur Anlage kommen. Hierdurch ist sichergestellt, daß auch die Spannbolzen 13 wieder in ihre ursprüngliche Schrägstellung zurückgebracht werden. Die Druckfeder 15 hält das zweite Spannglied 11 mit seinen Kugeln 14 in ständiger Anlage an den Spannbolzen 13 und bewirkt außerdem, daß die Betätigungs- und Zugstange 10 nach rechts in Entspannstellung bewegt wird. Sobald die Begrenzungsflächen 12a an dem ersten Spannglied 5 anliegen, wird die Zustellhülse 2 gemäß Figur 2 im Uhrzeigersinn gedreht, solange, bis ihre Anschlagfläche 18a an dem Anschlagbolzen 19 wieder zur Anlage kommt. Damit nimmt auch der Handhebel H wieder seine in Figur 2 strichpunktiert dargestellte Lage ein. Durch die Verdrehung der Zustellhülse 2 gegenüber dem Gehäuse 1 bewegt sich die Betätigungs- und Zugstange 10 gemäß Figur 1 noch weiter nach rechts, bis sie wieder ihre Ausgangs- oder Entspannstellung erreicht hat. Eine bewegliche Spannbacke wird hiermit wieder vollständig in ihre Öffnungsstellung bewegt.

Das in den Figuren 7 - 11 dargestellte Ausführungsbeispiel des Spannelementes unterscheidet sich von dem vorhergehend beschriebenen im wesentlichen nur durch die Ausgestaltung der Betätigungs- und Zugstange 10' und des ersten Spanngliedes 5'. Für die übrigen Teile des Spannelementes wurden daher die gleichen Bezugszeichen wie bei dem vorhergehend beschriebenen Ausführungsbeispiel verwendet und obige Beschreibung trifft sinngemäß zu. Im Gegensatz zu Figur 1 zeigt Figur 7 das Spannelement in Spannstellung.

Bei dem in Figur 7 - 11 dargestellten Ausführungsbeispiel ist die Betätigungs- und Zugstange durch eine zentrale Ausnehmung 22 des ersten Spanngliedes 5' hindurchgeführt. Das erste Spannglied 5' wird durch den Boden der Zustellhülse 2 gebildet, es kann jedoch auch ein in die Zustellhülse eingesetztes und in ihr fixiertes separates Teil sein. Die Spannbolzen 13 bzw. deren Kugeln 14 sind radial außerhalb der Betätigungs- und Zugstange 10' am ersten Spannglied 5' abgestützt. Das zweite Spannglied 11 besteht mit der Betätigungs- und Zugstange 10' aus einem Stück, wobei die Kugeln 14 am zweiten Spannglied 11 möglichst dicht an der Zustellhülsenachse A angeordnet sind. Hierdurch wird erreicht, daß die Spannbolzen 13 mit möglichst kleinem Abstand a zur Zustellhülsenachse abgestützt sind und das zur Verdrehung der Betätigungs- und Zugstange 10' erforderliche Drehmoment kleingehalten wird.

Die genaue Ausgestaltung der Betätigungs- und Zugstange 10' ist anhand der Figuren 8 - 11 erkennbar. Sie ist im Bereich der Spannbolzen 13 mit zwei einander diametral gegenüberliegenden Aussparungen 23 versehen, die sich zum zweiten Spannglied 11 hin einander nähern, wie aus Figur 8 ersichtlich ist. Hierdurch ist die Betätigungs- und Zugstange 10' im Bereich der Spannbolzen im Axialschnitt keilförmig. Um eine möglichst geringe Schwächung der Betätigungs- und Zugstange 10' im Bereich der Spannbolzen 13 zu erreichen, sollen die Aussparungen 23 nur so groß ausgebildet sein, daß sie einerseits eine unbehinderte Bewegung der Spannbolzen 13 zulassen und andererseits die Betätigungs- und Zugstange 10' im Bereich der Aussparungen 23 einen möglichst großen Restquerschnitt aufweist. Wie die Ausgestaltung der Aussparungen 23 im einzelnen ist und welche Restquerschnitte verbleiben, ist anhand der Figuren 9 - 11 erkennbar. Die Aussparungen 23 müssen an diametral gegenüberliegenden Seiten zur Seite hin offen sein, damit Platz für die durch die gegenseitige Verdrehung der Spannbolzen 5', 11 verschränkten Spannglieder 13 geschaffen wird.

Die Wirkungsweise des in Figur 7 - 11 dargestellten Spannelementes entspricht der Wirkungsweise des in Figur 1 - 6 gezeigten Ausführungsbeispieles, so daß sich eine nochmalige Beschreibung erübrigt. Bei dem in Figur 7 - 11 gezeigten Ausführungsbeispiel wird jedoch die Drehbewegung zwischen dem zweiten Spannglied 11 und der Zustellhülse 2 durch einen in die Zustellhülse 2 eingesetzten Anschlagbolzen 24 begrenzt, der in eine sich über einen vorbestimmten Winkelbereich erstreckende Nut 25 in der mit dem zweiten Spannglied 11 fest verbundenen Scheibe 26 eingreift, ähnlich wie es in dem deutschen Patent 40 18 284 gezeigt und beschrieben ist. Diese Art der Begrenzung der Verdrehung zwischen dem zweiten Spannglied 11 und der Zustellhülse 2 entspricht der Art der Verdrehbegrenzung zwischen Zustellhülse 2 und Gehäuse 1 durch den Anschlagstift 19 des ersten Ausführungsbeispieles. Dieselbe Verdrehbegrenzung ist auch beim zweiten Ausführungsbeispiel zwischen Zustellhülse 2 und Gehäuse 1 vorgesehen. Wie man weiterhin aus Figur 7, die die Spannstellung zeigt, erkennen kann, sind die Achsen A1 in Spannstellung nicht parallel zur Zustellhülsenachse A angeordnet. Sie liegen jedoch parallel oder im wesentlichen parallel zu einer durch die Zustellhülsenachse A verlaufenden Ebene, die mit der Zeichenebene übereinstimmt.

Damit das Spannelement möglichst kompakt ist und für die verschiedensten Spannvorrichtungen verwendbar ist, ist es zweckmäßig, wenn die Betätigungs- und Zugstange 10, 10' dicht neben ihrem Austritt aus dem Gehäuse 1 endet und an ihrem aus dem Gehäuse 1 herausragenden Ende 10a eine Kupplung aufweist, über welche sie dreh- und zugfest mit einer Antriebsspindel einer Spanneinrichtung, insbesondere der Antriebsspindel eines Maschinenschraubstockes oder einer Schnellspannvorrichtung,kuppelbar ist. Zweckmäßig ist hierbei, wie es bei beiden Ausführungsbeispielen der Fall ist, das aus dem Gehäuse 1 herausragende Ende 10a hohl ausgebildet und weist eine Querbohrung 20 für einen auch die Antriebsspindel 21 durchsetzenden Kupplungsbolzen auf. Dieser Kupplungsbolzen greift auch in die Querbohrung 20 ein.

Bei Maschinenschraubstöcken hat diese Ausgestaltung, bei der die Betätigungs- und Zugstange 10, 10' dicht neben dem Gehäuse 1 endet, den Vorteil, daß die Antriebsspindel durch Herausnahme des Kupplungsbolzens sehr leicht von dem Spannelement gelöst werden kann. Die Antriebsspindel und ein die bewegliche Spannbacke tragender Schieber können dann leicht aus dem Grundkörper des Maschinenschraubstockes herausgezogen werden. Hierdurch werden Bohrungen frei zugänglich, die im Grundkörper unterhalb der Antriebsspindel und des Schiebers vorgesehen sind. Durch diese Bohrungen können Schrauben hindurchgeführt werden, die in Nutensteine des Aufspanntisches einer Werkzeugmaschine einschraubbar sind. Mittels dieser Schrauben kann der Maschinenschraubstock in einfacher Weise und ohne Verwendung von Spannpratzen auf dem Aufspanntisch befestigt werden. Durch diese Schrauben wird der Grundkörper unterhalb der Antriebsspindel und des Schiebers mit dem Aufspanntisch fest verspannt, wodurch auch einer Verformung des Grundkörpers durch die Spannkraft des Spannelementes entgegengewirkt wird. Die Kupplungsstelle der Zugstange in der Nähe ihres Austrittes aus dem Gehäuse des Spannelementes ist nicht nur bei den erfindungsgemäßen Spannelementen von Vorteil, sondern auch bei solchen anderer Bauart, denn in jedem Fall ermöglicht sie ein rasches Kuppeln und Entkuppeln der Antriebsspindel und ein vollständiges Abziehen sowohl des Schiebers als auch der Antriebsspindel selbst. Hierdurch ist dann eine rasche Zugänglichkeit der Befestigungsschrauben für den Grundkörper gewährleistet.

Als Befestigungsschrauben können auch Paßschrauben dienen, die eine genaue Positionierung des Maschinenschraubstockes an sogenannten Rasterplatten ermöglichen. Außerdem hat die Befestigung des Maschinenschraubstockes mittels Befestigungsschrauben, die in der beschriebenen Art unterhalb der Schraubspindel durch den Grundkörper geführt sind, den Vorteil, daß auch mehrere Maschinenschraubstöcke in platzsparender Weise dicht nebeneinander angeordnet werden können.

## Patentansprüche

1. Spannelement, enthaltend eine Schnellzustellvorrichtung kombiniert mit einem Kraftverstärker, mit einer den Kraftverstärker umschließenden, drehbaren Zustellhülse (2), welche ein Außengewinde (3) aufweist und mit diesem in ein Muttergewinde (4) eines sie umgebenden Gehäuses (1) eingreift und deren Drehbewegung gegenüber dem Gehäuse durch Anschlagflächen (18a, 18b) begrenzt ist, mit einem in der Zustellhülse (2) fest angeordneten ersten Spannglied (5), mit einem in der Zustellhülse begrenzt drehbar angeordneten zweiten Spannglied (11), mit mehreren zwischen den Spanngliedern (5, 11) angeordneten Spannbolzen (13), die in einer Endlage des zweiten Spanngliedes (11) in spitzem Winkel zu einer durch die Zustellhülsenachse verlaufenden Ebene geneigt und in der anderen Endlage des zweiten Spanngliedes annähernd parallel zu dieser Ebene angeordnet sind, mit einer beide Spannglieder aufeinanderzu belastenden Druckfeder (15) und mit einer sich durch mindestens eine Ausnehmung des ersten Spanngliedes hindurcherstreckende Betätigungs- und Zugstange, die mit dem zweiten Spannglied dreh- und zugfest verbunden ist, derart, daß beim Drehen der Betätigungs- und Zugstange (10, 10') im Spannsinn dieselbe zunächst durch Drehung der Zustellhülse gegenüber dem Gehäuse und dann durch Verdrehung des zweiten Spanngliedes gegenüber dem ersten und dadurch bedingtes Aufrichten der Spannbolzen (13) in zur Ebene parallele Spannstellung, in einem Zustellhub und einem anschließenden Spannhub axial in das Gehäuse hineingezogen wird, **dadurch gekennzeichnet,** daß die Spannbolzen (13) am zweiten Spannglied (11) in möglichst kleinem Abstand (a) zur Zustellhülsenachse (A) abgestützt sind und daß die Betätigungs- und Zugstange (10, 10') entweder durch eine zentrale Ausnehmung (22) im ersten Spannglied (5') hindurchgeführt ist, wobei die Achsen (A1) der Spannbolzen (13) in Spannstellung nicht parallel zur Zustellhülsenachse (A) verlaufen, oder durch zwei einander diametral gegenüberliegende, seitliche Ausnehmungen (9) des ersten Spanngliedes (5) hindurchgeführt ist, wobei letztgenannte Ausnehmungen (9) in Umfangsrichtung der Zustellhülse (2) so groß sind, daß sie eine begrenzte, für die Drehung des zweiten Spanngliedes (11) gegenüber dem ersten Spannglied (5) ausreichende Verdrehung der Betätigungs- und Zugstange (10) gegenüber der Zustellhülse (2) zulassen.

2. Spannelement nach Anspruch 1, **dadurch gekennzeichnet,** daß bei Durchführung der Betätigungs- und Zugstange (10') durch die zentrale Ausnehmung (22) des ersten Spanngliedes (5') die Spannbolzen (13) radial außerhalb der Betätigungs- und Zugstange (10') am ersten Spannglied (5') abgestützt sind, daß das zweite Spannglied (11) mit der Betätigungs- und Zugstange (10') aus einem Stück besteht, daß an zwei diametral gegenüberliegenden Seiten der Betätigungs- und Zugstange je ein Spannbolzen (13) vorgesehen ist und daß die Betätigungs- und Zugstange (10') im Bereich der Spannbolzen (13) für diese mit zwei einander diametral gegenüberliegenden Aussparungen (23) versehen ist, die sich zum zweiten Spannglied (11) hin einander nähern und nur so groß ausgebildet sind, daß sie einerseits eine unbehinderte verschränkende Bewegung der Spannbolzen (13) zulassen und andererseits die Betätigungs- und Zugstange (10') im Bereich der Aussparungen einen möglichst großen Restquerschnitt aufweist. (Fig. 7 - 11)

3. Spannelement nach Anspruch 1, **dadurch gekennzeichnet,** daß das erste Spannglied (5) brückenartig ausgebildet und an einem Ende der Zustellhülse (2) fixiert ist, und daß die Betätigungs- und Zugstange (10) hohl ausgebildet ist und ihre Wandung im Bereich des ersten Spanngliedes (5) mit einander diametral gegenüberliegenden Aussparungen (12) versehen ist, die in Umfangsrichtung so groß sind, daß die Betätigungs- und Zugstange (10) gegenüber der Zustellhülse (2) um mindestens 30° verdrehbar ist. (Fig. 1 - 6)

4. Spannelement nach Anspruch 3, **dadurch gekennzeichnet,** daß die Aussparungen (12) axial verlaufende Begrenzungsflächen (12a, 12b) aufweisen, die als Anschlagflächen zur Begrenzung der gegenseitigen Verdrehung der beiden Spannglieder (5, 11) vorgesehen sind und mit seitlichen Begrenzungsflächen (8) des brückenartig ausgebildeten Spanngliedes (5) zusammenwirken.

5. Spannelement nach einem der vorhergehenden Ansprüche, **dadurch gekennzeichnet,** daß jeder Spannbolzen (13) an seinen beiden Enden Kugelpfannen (13a) aufweist und daß in beiden Spanngliedern Kugeln (14) angeordnet sind, an denen sich die Spannbolzen (13) mit ihren Kugelpfannen (13a) abstützen.

6. Spannelement nach Anspruch 1, **dadurch gekennzeichnet,** daß die Betätigungs- und Zugstange (10, 10') dicht neben ihrem Austritt aus dem Gehäuse (1) endet und an ihrem aus dem Gehäuse herausragenden Ende (10a) eine Kupplung (20) aufweist, über welche sie dreh- und zugfest mit einer Antriebsspindel (21) einer Spanneinrichtung, insbesondere der Antriebsspindel eines Maschinenschraubstockes kuppelbar ist.

7. Spannelement nach Anspruch 6, **dadurch gekennzeichnet,** daß das aus dem Gehäuse herausragende Ende (10a) hohl ausgebildet ist und eine Querbohrung (20) für einen auch die Antriebsspindel (21) durchsetzenden Kupplungsbolzen aufweist.

## Claims

1. Clamp element, including a rapid feed device combined with a force amplifier, with a rotatable feed sleeve (2) surrounding the force amplifier and having an external thread (3) engaging in a female thread (4) of a housing (1) surrounding the same, the rotational movement of the sleeve relative to the housing being restricted by stop surfaces (18a, 18b), a first clamp member (5) fixedly arranged in the feed sleeve (2), a second clamp member (11) arranged for limited rotation in the feed sleeve, a plurality of tightening pins (13) arranged between the clamp members (5, 11), which pins are inclined at an acute angle to a plane running through the feed sleeve axis in one end position of the second clamp member (11) and are arranged approximately parallel to this plane in the other end position of the second clamp member, a compression spring (15) biasing the two clamp members towards one another, and an actuating and tensioning rod extending through at least one aperture of the first clamp member and connected fast rotationally and in tension to the second clamp member, such that, on rotation of the actuating and tensioning rod (10, 10') in its tightening sense it is drawn axially into the housing in a feed stroke and a following tightening stroke, firstly by rotation of the feed sleeve relative to the housing and them by rotation of the second clamp member relative to the first, with consequent righting of the tightening pins (13) into the clamping position parallel to the plane, characterized in that the tightening pins (13) are supported on the second clamp member (11) at the smallest possible distance (a) from the feed sleeve axis (A) and in that the actuating and tensioning rod (10, 10') is passed either through a central aperture (22) in the first clamp member (5') the axes (A1) of the tightening pins being not parallel to the feed sleeve axis, or through two diametrically opposite lateral apertures (9) of the first clamp member (5), where the last-mentioned apertures(9) are sufficiently large in the peripheral direction of the feed sleeve (2) to allow a limited rotation of the actuating and tensioning rod (10) relative to the feed sleeve (2) sufficient for the rotation of the second clamp member (11) relative to the first clamp member (5).

2. Clamp element according to claim 1, characterized in that, with the actuating and tensioning rod (10') passed through the central aperture (22) of tile first clamp member (5'), the tightening pins (13) are supported on the first clamp member (5') radially outside the actuating and tensioning rod (10'), in that the second clamp member (11) is unitary with the actuating and tensioning rod (10'), in that a tightening pin (13) is provided on each of two diametrically opposite sides of the actuating and tensioning rod and in that the actuating and tensioning rod (10') is provided in the region of the tightening pins (13) with two diametrically opposite recesses (23) for these, which recesses approach each other towards the second clamp member (11) and are made only large enough on the one hand to allow an unimpeded, limited movement of the tightening pins (13) and on the other hand to give the actuating and tensioning rod (10') as large as possible a residual cross-section in the region of the recesses. (Figures 7 - 11)

3. Clamp element according to claim 1, characterized in that the first clamp member (5) is bridge-like and is fixed to one end of the feed sleeve (2), and in that the actuating and tensioning rod (10) is made hollow and its wall is provided with diametrically opposite cut-outs (12) in the region of the first clamp member (5), the cut-outs being large enough in the peripheral direction for the actuating and tensioning rod (10) to be rotatable relative to the feed sleeve (2) through at least 30°. (Figures 1 - 6)

4. Clamp element according to claim 3, characterized in that the cut-outs (12) have axially extending bounding surfaces (12a, 12b), which are provided as stop surfaces for limiting the mutual rotation of the two clamp members (5, 11) and cooperate with side bounding surfaces (8) of the clamp member (5) formed as a bridge.

5. Clamp element according to any of the preceding claims, characterized in that each tightening pin (13) has spherical cups (13a) at both ends and in that balls (14) are arranged in both clamp members, on which balls the tightening pins (13) abut with their spherical cups (13a).

6. Clamp element according to claim 1, characterized in that the actuating and tensioning rod (10, 10') ends close by where it emerges from the housing (1) and has a coupling (20) on its end (10a) projecting from the housing, through which coupling it can be connected fast rotationally and in tension to a drive spindle (21) of a clamp device, especially the drive spindle of a machine vice.

7. Clamp element according to claim 6, characterized in that the end (10a) projecting from the housing is made hollow and has a cross bore (20) for a coupling pin extending also through the drive spindle (21).

## Revendications

1. Elément de serrage comprenant un dispositif de positionnement rapide avec amplificateur de force, avec une douille de positionnement rotative (2), qui entoure l'amplificateur de force, présente un filetage extérieur (3), s'engage par ce dernier dans un filetage intérieur (4) d'un boîtier (1) qui l'entoure et dont le mouvement de rotation par rapport au boîtier est limité par des faces de butée (18a, 18b), avec un premier organe de serrage (5) disposé fixement dans la douille de positionnement (2), avec un deuxième organe de serrage (11) disposé avec une possibilité de rotation limitée dans la douille de positionnement, avec plusieurs goupilles de serrage (13) disposées entre les organes de serrage (5, 11), goupilles qui sont disposées, dans une position finale du deuxième organe de serrage (11), en étant inclinées sous un angle aigu par rapport à un plan passant par l'axe de la douille de positionnement et, dans l'autre position finale du deuxième organe de serrage, en étant approximativement parallèles à ce plan, avec un ressort de pression (15) sollicitant les deux organes de serrage l'un vers l'autre, et avec une tige d'actionnement et de traction s'étendant à travers au moins un évidement du premier organe de serrage, tige qui est reliée en solidarité de rotation et de traction au deuxième organe de serrage, de telle sorte que, lors de la rotation de la tige d'actionnement et de traction (10, 10') dans le sans de serrage, cette tige est, d'abord par rotation de la douille de positionnement par rapport au boîtier, puis par rotation du deuxième organe de serrage par rapport au premier et par le redressement ainsi engendre des goupilles de serrage (13) en position de serrage parallèle au plan, rentrée axialement dans le boîtier en une course de positionnement suivie d'une course de serrage, **caractérisé** en ce que les goupilles de serrage (13) sont appuyées contre le deuxième organe de serrage (11) à une distance (a) la plus petite possible de l'axe (A) de la douille de positionnement, et en ce que la tige d'actionnement et de traction (10, 10') passe, soit par un évidement central (22) dans le premier organe de serrage (5'), les axes (A1) des goupilles de serrage ne s'étendant pas parallèlement à l'axe (A) de la douille de positionnement, soit par deux évidements latéraux (9) diamétralement opposés du premier organe de serrage (5), ces derniers évidements (9) étant, dans la direction circonférentielle de la douille de positionnement (2), d'une grandeur telle qu'ils autorisent une rotation limitée de la tige d'actionnement et de traction (10) par rapport à la douille de positionnement (2), rotation qui est suffisante pour la rotation du deuxième organe de serrage (11) par rapport au premier organe de serrage (5).

2. Elément de serrage selon la revendication 1, **caractérisé** en ce que, lorsque la tige d'actionnement et de traction (10') passe par l'évidement central (22) du premier organe de serrage (5'), les goupilles de serrage (13) sont appuyées contre le premier organe de serrage (5') radialement à l'extérieur de la tige d'actionnement et de traction (10'), en ce que le deuxième organe de serrage (11) est réalisé d'une pièce avec la tige d'actionnement et de traction (10'), en ce qu'une goupille de serrage respective (13) est prévue sur chacun de deux co'tés diamétralement opposés de la tige d'actionnement et de traction, et en ce que la tige d'actionnement et de traction (10') est pourvue, dans la région des goupilles de serrage (13), de deux évidements diamétralement opposés (23) pour ces goupilles, évidements qui se rapprochent du deuxième organe de serrage (11) et sont réalisés d'une grandeur seulement suffisante pour que, d'une part, ils autorisent un déplacement d'entrecroisement non engravé des goupilles de serrage (13) et que, d'autre part, la tige d'actionnement et de traction (10') présente une section résiduelle la plus grande possible dans la région des évidements. (Figures 7 à 11).

3. Elément de serrage selon la revendication 1, **caractérisé** en ce que le premier organe de serrage (5) est réalisé en forme de portique et est fixé à une extrémité de la douille de positionnement (2), et en ce que la tige d'actionnement et de traction (10) est réalisée creuse et sa paroi est pourvue, dans la région du premier organe de serrage (5), d'évidements (12) diamétralement opposés qui sont, en direction circonférentielle, d'une grandeur telle que la tige d'actionnement et de traction (10) peut être tournée d'au moins 30° par rapport à la douille de positionnement (2). (Figures 1 à 6).

4. Elément de serrage selon la revendication 3, **caractérisé** en ce que les évidements (12) présentent des faces de délimitation (12a, 12b) s'étendant axialement, qui sont prévues comme faces de butée pour imiter la rotation réciproque des deux organes de serrage (5, 11) et qui coopèrent avec des faces de délimitation latérales (8) de l'organe de serrage (5) réalisé en forme de portique.

5. Elément de serrage selon une des revendications précédentes, **caractérisé** en ce que chaque goupille de serrage (13) présente des coussinets sphériques (13a) à ses deux extrémités, et en ce que des billes (14) sont disposées dans les deux organes de serrage, contre lesquelles les goupilles de serrage (13) s'appuient par leurs coussinets sphériques (13a).

6. Elément de serrage selon la revendication 1, **caractérisé** en ce que la tige d'actionnement et de traction (10, 10') se termine peu après sa sortie du boîtier (1) et présente, à son extrémité (10a) dépassant hors du boîtier, un accouplement (20) par l'intermédiaire duquel elle peut être accouplée en solidarité de rotation et de traction à une broche d'entraînement (21) d'un dispositif de serrage, notamment à la broche d'entraînement d'un étau de machine.

7. Elément de serrage selon la revendication 6, **caractérisé** en ce que l'extrémité (10a) dépassant hors du boîtier est réalisée creuse et présente un perçage transversal (20) pour une goupille d'accouplement qui traverse également la broche d'entraînement (21).
